# EUROPÄISCHE PATENTSCHRIFT

(11) **EP 1 688 962 B1**
(45) Veröffentlichungstag und Bekanntmachung des Hinweises auf die Patenterteilung: **23.04.2008**
(21) Anmeldenummer: 06002026.0
(22) Anmeldetag: 01.02.2006
(51) Int. Cl.: G21C 19/36, G21C 19/375, B30B 9/32

(54) **Vorrichtung und Verfahren zum Konditionieren eines Brennelementskelettes eines Kernreaktors**
Method and device for conditioning a nuclear reactor fuel element skeleton
Dispositif et procédé destinés au conditionnement d'une ossature d'un élément de combustion d'un réacteur nucléaire

(30) Priorität: 04.02.2005 DE 102005005444; 26.03.2005 DE 102005013984
(43) Veröffentlichungstag der Anmeldung: 09.08.2006
(73) Patentinhaber: AREVA NP GmbH, 91052 Erlangen (DE)
(72) Erfinder: Nahr, Wolgang, 91056 Erlangen (DE)
(74) Vertreter: Mörtel & Höfner

(56) Entgegenhaltungen:
- EP-A- 0 089 824
- CH-A- 515 118
- FR-A- 2 825 831
- US-A- 4 537 711
- US-A- 4 588 524
- US-A- 5 060 546

## Beschreibung

Die Erfindung bezieht sich auf eine Vorrichtung und ein Verfahren zum Konditionieren eines Brennelementskelettes eines Kernreaktors.

Bei der Handhabung von Brennelementen, beispielsweise bei deren Transport, kann es zu Beschädigungen von Strukturteilen des Brennelementes, beispielsweise von Abstandhaltern kommen, die eine weitere Verwendung der die Brennstäbe aufnehmenden Basisstruktur, das sogenannte Brennelementskelett, verhindern. In einem solchen Fall werden die Brennstäbe entnommen und in ein neues Brennelementskelett umgesetzt, um eine weitere Ausnutzung des Brennstoffes im Kernreaktor zu ermöglichen. Dieser Vorgang wird auch als Umskelettieren bezeichnet. Nach Entnahme der Brennstäbe verbleibt ein nunmehr brennstofffreies, aber bestrahltes, aus Abstandhaltern und Stützrohren (Instrumentierungsrohre, Steuerstabführungsrohre, Wasserrohre oder lediglich zur Stabilisierung dienende Strukturrohre) bestehendes Brennelementskelett, das für seine weitere Lagerung einen zusätzlichen Platz im Brennelementlagerbecken oder im Brennelementlagergestell in Anspruch nimmt. Der hierfür zur Verfügung stehende Platz ist aber begrenzt, so dass langfristig ein Abtransport in Zwischen- oder Endlager notwendig ist.

In der EP 0 089 824 B2 wird deshalb vorgeschlagen, ein bestrahltes Brennelementskelett für die weitere Lagerung dadurch zu konditionieren, dass dieses mit einer Pressvorrichtung, die in einem am Brennelementlagerbecken eingehängten Gestell angeordnet ist, zunächst kompaktiert und anschließend in eine ebenfalls im Gestell angeordnete Schervorrichtung umgesetzt wird, in der es dann in kleine Stücke zerlegt wird.

Aus der FR 2825831 A1 ist eine Vorrichtung und ein Verfahren zum Konditionieren eines bestrahlten Brennelementskelettes bekannt, bei der Pressvorrichtung und Schervorrichtung gemeinsam in einem Schacht angeordnet sind, so dass das Brennelement ohne Umsetzen abwechselnd gepresst und geschnitten werden kann.

US 4 537 711 offenbart ein Brennelementskelett-Kompaktierungssystem, wobei neben einer vertikalen Schneidekammer eine Pressvorrichtung angeordnet ist.

Der Erfindung liegt nun die Aufgabe zu Grunde, eine Vorrichtung anzugeben, mit der ein sicheres und einfaches Konditionieren eines Brennelementskelettes möglich ist. Außerdem liegt der Erfindung die Aufgabe zu Grunde ein Verfahren zum Konditionieren eines Brennelementskeletts mit Hilfe einer solchen Vorrichtung anzugeben.

Die erstgenannte Aufgabe wird gelöst mit einer Vorrichtung mit den Merkmalen des Patentanspruches 1.

Mit einer solchen Vorrichtung ist in Kombination ein Zerlegen und ein Kompaktieren des Brennelementskelettes unter Wasser möglich. Da das Brennelementskelett auf zumindest nahezu seiner gesamten Länge in den Schacht eingeführt werden kann, ist es möglich, das Brennelementskelett vor dem Zerlegen auf seiner gesamten Länge zu verpressen. Damit ist die Gefahr, dass beim nachfolgenden Schneiden Teile abspringen, verringert, da bei einem auf seiner gesamten Länge komplett verpressten Brennelementskelett die beim abschnittsweisen Verpressen entstehenden Zugspannungen weitgehend abgebaut sind. Da das Brennelementskelett mit einer Scherschneidvorrichtung zerlegt wird, entsteht außerdem praktisch kein Sekundärabfall in Form von Spänen oder Schleifstaub, so dass eine Verunreinigung der Umgebung nicht stattfindet und keine weiteren aufwendigen Maßnahmen erforderlich sind, um das im Arbeitsraum befindliche Wasser vom Beckenwasser vollständig oder durch Filtereinrichtungen zu trennen. Auf dieses Weise kann das Konditionieren problemlos innerhalb einer im Betrieb befindlichen Kernkraftwerksanlage erfolgen.

Ein besonders geringer Platzbedarf für die Vorrichtung wird benötigt, wenn Pressvorrichtung und Scherschneidvorrichtung übereinander angeordnet sind, so dass nur ein Schacht erforderlich ist.

Wenn außerdem die Pressvorrichtung und die Scherschneidvorrichtung eine Press- bzw. Schneidkammer enthalten, die seitlich abgeschlossen ist und dicht aufeinander bzw. auf dem Schacht aufsitzen, ist sichergestellt, dass beim Pressen oder Schneiden eventuell abspringende lose Teile nicht in das umliegende Beckenwasser gelangen. Pressvorrichtung, Scherschneidvorrichtung, Schacht und daran angekoppelter Auffangbehälter bilden ein nach unten und zur Seite geschlossenes System, so dass ein Entweichen von Fragmenten in das umgebende Beckenwasser praktisch ausgeschlossen ist.

Wenn oberhalb der Scherschneid- und der Pressvorrichtung ein Einführtrichter angeordnet ist, wird das Einführen eines Brennelementes in die Vorrichtung erleichtert. Der Einführtrichter bietet durch seine Bauhöhe außerdem einen zusätzlichen Schutz vor einem Entweichen von Fragmenten in die Umgebung.

In einer besonders vorteilhaften Ausführungsform ist die Scherschneidvorrichtung quer zur Pressachse zustellbar. Dies ermöglicht ein vollständiges Zerlegen des Brennelementskelettes in jeder Schneidebene mit wenigen Schnitten.

Gemäß einer besonders bevorzugten Ausgestaltung der Erfindung sind Gestell, Schacht, Scherschneidvorrichtung, Pressvorrichtung und der gegebenenfalls vorhandene Einführtrichter jeweils selbstständige zusammensetzbare und voneinander trennbare Baueinheiten. Mit anderen Worte die Vorrichtung ist modular aufgebaut und wird erst vor Ort zusammengebaut. Dies ermöglicht eine platzsparende Lagerung der einzelnen Module sowie eine erhöhte Flexibilität hinsichtlich ihres Aufstellungsortes.

Eine besonders vorteilhafter Aufstellungsort unter Ausnutzung bereits vorhandener Einbauten im Brennelementlagerbecken ist möglich, wenn der Schacht in einem Gestell gelagert ist, das in Arbeitsposition am Rand eines Brennelementlagergestells in zumindest eine leere Brennelementposition eingehängt ist und sich in einem unteren Wandbereich des Brennelementlagergestells abstützt.

In einer weiteren bevorzugten Ausführungsform ist die Auslassöffnung in einer Seitenwand des Schachtes angeordnet. Dies ermöglicht ein besonders einfaches Anbringen und Entnehmen des Auffangbehälters.

Insbesondere ist die Auslassöffnung mit einem nach oben schwenkbaren Deckel versehen, der zugleich zum Verschließen des oben offenen Auffangbehälters dient, wenn dieser in Arbeitsposition an die Auslassöffnung angekoppelt ist. Dadurch wird sicher vermieden, dass in den Auffangbehälter fallendes Schnittgut in das Beckenwasser gelangen kann.

Wenn zu beiden Seiten des Schachtes eine schräg zur Längsachse verlaufende Führungskulisse angeordnet ist, in die seitlich am Anfang vom Auffangbehälter angeordnete Führungsbolzen einführbar sind, wird ein Anbringen des Auffangbehälters an die Auslassöffnung erleichtert, da diese durch ihr Eigengewicht ohne zusätzlichen Kraftaufwand von selbst dichtend an die Auslassöffnung gleitet.

In einer besonders vorteilhaften Ausgestaltung der Erfindung ist die Scherschneidvorrichtung begrenzt beweglich in einem Kugelgelenk gelagert. Durch eine solche bewegliche Lagerung der Scherschneidvorrichtung wird sicher verhindert, dass an der Schnittstelle Kräfte entstehen, die im Augenblick des Trennens ein unkontrolliertes Auseinanderspringen der voneinander getrennten Teile verursachen.

Insbesondere sind die Scherschneid- und die Pressvorrichtung hydraulisch angetrieben, wobei vorzugsweise als unmittelbar auf die Hydraulikaggregate der Scherschneid- und Pressvorrichtung wirkendes Hydraulikfluid Wasser, vorzugsweise das im Brennelementlagerbecken verwendete Deionat vorgesehen ist. Dadurch ist im Falle einer Leckage im Hydrauliksystem eine Kontamination des Beckenwassers mit Hydrauliköl verhindert. Um dennoch den Einsatz konventioneller mit Öl betriebener Hydraulikaggregate zu ermöglichen, ist in die Hydraulikleitung ein außerhalb des Beckenwassers positionierbarer Medienwandler eingebaut.

Die Montage der Vorrichtung erfolgt aufgrund der modularen Bauweise in folgenden Schritten. Zunächst wird der zumindest eine Schacht in das Brennelementlagerbecken eingebracht und dort fixiert. Auf dem Schacht oder die Schächte werden die Pressvorrichtung und die Scherschneidvorrichtung aufgesetzt. Danach erfolgt die Montage des Einführtrichters oder der Einführtrichter. Der oder die Auffangbehälter können zu einem beliebigen Zeitpunkt nach erfolgter Montage des Schachtes an der seitlichen Auslassöffnung angebracht werden. Das Einbringen und Fixieren des Schachtes erfolgt in einer bevorzugten Ausführungsform in der Weise, dass zunächst ein Gestell in zumindest eine leere Brennelementposition am Rand des Brennelementlagergestells eingehängt wird und anschließend eine Montage des Schachtes im Gestell erfolgt.

Hinsichtlich der des Verfahrens wird die Aufgabe gemäß der Erfindung gelöst mit einem Verfahren mit den Merkmalen des Patentanspruches 14. Gemäß diesen Merkmalen wird in einem ersten Schritt das Brennelement in die Pressvorrichtung bis zu einer Tiefe eingeführt, in der sich ein Abstandhalter im Wirkbereich eines Pressstempels der Pressvorrichtung befindet. Danach erfolgt ein seitliches Pressen des Abstandhalters und der daran befindlichen Stützrohre mit einer ersten Presskraft. Der mit der ersten Presskraft erfolgende Pressvorgang wird für jeden Abstandhalter durchgeführt, in dem das Brennelement durch entsprechendes axiales Verschieben in der Pressvorrichtung positioniert wird. Anschließend wird der Pressvorgang für jeden Abstandhalter mit einer zweiten, höheren Presskraft wiederholt. In einem nächsten Schritt wird das verpresste Brennelementskelett im Arbeitsbereich der Scherschneidvorrichtung in eine obere Ausgangsposition verbracht und es werden die Stützrohre mit der Scherschneidvorrichtung oberhalb des untersten Abstandhalters abgeschnitten. Danach wird das Brennelementskelett stufenweise nach unten verfahren und es werden sukzessive die Stützrohre oberhalb und/oder unterhalb eines jeden Abstandhalters abgeschnitten.

Auf diese Weise besteht das im Auffangbehälter aufgefangene Schnittgut aus einzelnen Stützrohrsegmenten sowie aus kompaktierten Abstandhaltern, aus denen lediglich kurze Stützrohrstücke herausragen.

Zum Handhaben und Transportieren des Brennelementskelettes ist auf dem obersten Abstandhalter ein an eine Greif- und Transportvorrichtung angekoppeltes Halteelement aufgesetzt, das eine auf dem Abstandhalter aufliegende Stützplatte und zumindest ein Ankerteil umfasst, das in eine Zelle des Abstandhalters eingeführt wird und mindestens zwei gegenüberliegende Stegwände dieser Zelle hintergreift. Durch eine solches Halteelement ist das Brennelementskelett axial gesichert und kann mit der Greif- und Transportvorrichtung angehoben, abgesenkt und seitlich transportiert werden. Das Halteelement ist dabei über ein Kupplungsteil lösbar mit der Greif- und Transportvorrichtung verbunden und verbleibt beim Kompaktieren im obersten Abstandhalter und wird mit diesem entsorgt.

Wenn das Halteelement zwei Ankerteile umfasst, die in unterschiedliche Zellen des Abstandhalters eingeführt werden können, so ist das Brennelementskelett auch sicher gegen ein Verdrehen gesichert.

Zur weiteren Erläuterung der Erfindung wird auf das Ausführungsbeispiel der Zeichnungen verwiesen. Es zeigen:
- Fig. 1a,b: eine Vorrichtung gemäß der Erfindung in Arbeitsposition in jeweils schematischen Seitenansichten,
- Fig. 2-10: eine schematische Veranschaulichung des vor Ort erfolgenden Aufbaus dieser Vorrichtung,
- Fig. 11: eine schematische Darstellung der mit der Vorrichtung durchgeführten Arbeitsschritte anhand eines sukzessiv kompaktierten Brennelementskelettes,
- Fig. 12: ein für die Handhabung des Brennelementes vorgesehenes und in den obersten Abstandhalter einsetzbares Halteelement in einem Längsschnitt,
- Fig. 13: einen oberen Abstandhaltergitter einer Brennelementposition, in der das Halteelement im Abstandhaltergitter fixiert wird,
- Fig. 14a,b: das in die Stützplatte eingesetzte Ankerteil sowie den zugehörigen Bolzen.

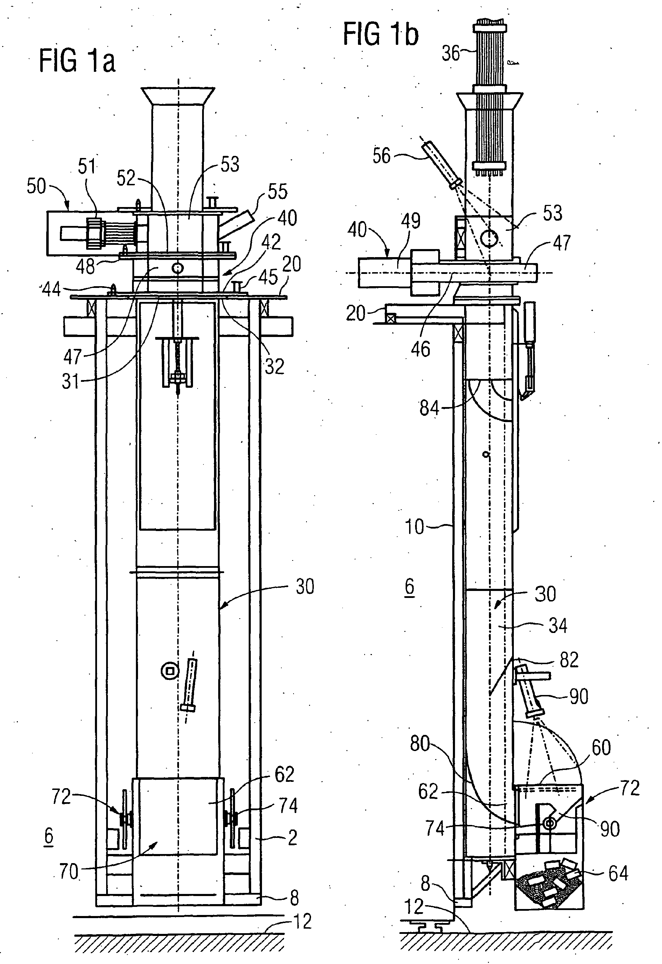

Gemäß Figuren 1a und b umfasst die Vorrichtung gemäß der Erfindung ein Gestell 2, das am Rand 4 in ein Brennelemehtlagergestell 6 eingehängt ist und sich in seinem unteren Bereich mit einem leistenförmigen Stützelement 8 an einer Außenwand 10 des Brennelementlagergestells 6 über dem Boden 12 des Brennelementlagerbeckens abstützt. Grundsätzlich ist es auch möglich, das Gestell 2 an einer Wand des Brennelementlagerbeckens in einer separaten Konsole einzuhängen.

In seinem oberen Bereich weist das Gestell 2 eine Lastverteilerplatte 20 auf, mit dem es auf der Oberkante des Brennelementlagergestells 6 aufliegt. Mit zwei am Gestell 2 angeordneten Fortsätzen ist das Gestell 2 in zwei leere Brennelementpositionen des Brennelementlagergestells 6 eingehängt. Im Gestell 2 ist ein aus zwei Schüssen bestehender, oben offener Schacht 30 eingehängt. Der Schacht 30 weist hierzu eine mit einer Einlassöffnung 31 versehene Flanschplatte 32 auf, die in einer in der Lastverteilerplatte 20 eingebrachten Ausnehmung einliegt. Der Schacht 30 erstreckt sich in Richtung seiner Längsachse 34 nahezu über die gesamte Höhe des Brennelementlagergestells 6, so dass er ein Brennelementskelett 36 nahezu auf seiner gesamten Länge aufnehmen kann.

Auf die Lastverteilerplatte 20 ist eine Pressvorrichtung 40 aufgesetzt, die eine untere Flanschplatte 42 enthält. Die Lastverteilerplatte 20 ist mit vorstehenden Führungsstiften 44 und Schraubbolzen 45 versehen, die in korrespondierende Führungsöffnungen der unteren Flanschplatte 42 eingreifen. Mit Hilfe der Schraubbolzen 45 ist die Pressvorrichtung 40 an der Lastverteilerplatte 20 durch eine Schraubverbindung fixiert. Die Pressvorrichtung 40 umfasst einen geschlossenen Rahmen 47, in dem ein Pressstempel mittels eine Hydraulikaggregates 49 in einer senkrecht zur Längsachse 34 des Schachtes 30 orientierten Pressachse 46 linear verschiebbar gelagert ist.

Auf eine obere Flanschplatte 48 der Pressvorrichtung 40 ist eine hydraulisch betriebene Scherschneidvorrichtung 50 mit ihrer unteren Flanschplatte 52 ebenfalls mit Hilfe von Führungsstiften, Führungsbolzen und korrespondierenden Führungsöffnungen passgenau aufgesetzt und an dieser fixiert. Die Scherschneidvorrichtung 50 umfasst ebenfalls einen geschlossenen Rahmen 53, der einen Arbeitsraum für die Schere bildet. In Fig.1a ist angedeutet, dass die Schere der Scherschneidvorrichtung 50 in einem begrenzten Ausmaß beweglich in einem Kugelgelenk 51 gelagert ist, so dass die Schneidebene in einem begrenztem Umfang unter einem von 90° abweichenden Winkel zur Längsachse 34 verlaufen kann. Die Schneidebene der Schere stellt sich dabei selbsttätig ein. Auf diese Weise wird ein Auseinanderspringen des Schnittguts verhindert. In den Rahmen 53 ist eine Kamera 55 eingebaut, die zum Beobachten der Schneid- und Pressvorgänge dient.

Auf der Scherschneidvorrichtung 50 ist ein Einführtrichter 54 angeordnet, der in den Schneidraum mündet. Eine weitere in den Einführtrichter gerichtete Kamera 56 dient ebenfalls zum Beobachten der korrekten Positionierung des Brennelementskelettes 36 bei den Schneid- und Pressvorgängen.

Die Scherschneidvorrichtung 50 wird mit Druckluft in einer senkrecht zur Pressachse 46 liegenden Zustellachse zugestellt, so dass ausschließlich durch einen linearen Vorschub alle Stützrohre des verpressten Brennelementskelettes von der Schere erfasst werden können.

Im zusammengebauten Zustand bilden Einführtrichter 54, Schneidraum, Pressraum, sowie Schacht einen zur Seite und nach unten dicht abgeschlossenen, sich in Axialrichtung erstreckendes Arbeitsraum.

In seinem unteren Bereich weist der Schacht 30 eine seitliche, von einem schwenkbaren Deckel 60 verschließbare Auslassöffnung 62 auf. An dieser Auslassöffnung 62 ist ein Auffangbehälter 70 mit seiner seitlichen Öffnung angeordnet, der das von der Scherschneidvorrichtung 50 erzeugte Schnittgut 64 des Brennelementskelettes 36 aufnimmt.

Am Gestell 20 ist zu beiden Seiten des Schachtes 30 eine schräg zur Längsachse verlaufende Führungskulisse 72 angeordnet, in die seitlich am Auffangbehälter 70 angeordnete Führungsbolzen 74 eingeführt sind. Durch die Schräge der Führungskulisse 72 gleitet der Auffangbehälter 70 durch sein Eigengewicht geführt in seine Endposition. Eine Kamera 76 dient zum Beobachten und Kontrollieren der richtigen Position des Auffangbehälters 70.

Im Schacht 30 ist schwenkbar eine gekrümmte Auslassklappe 80 zum Einführen des Schnittgutes 64 zur Auslassöffnung 62 angeordnet. Eine oberhalb der Auslassklappe 80 im Schacht 30 angeordnete ebenfalls schwenkbare Ablenkklappe 82 dient zum kontrollierten Lenken der Fallrichtung des Schnittgutes 64, so dass dieses mit einem kleinen Winkel auf die Auslassklappe 80 auftrifft und problemlos in den Auffangbehälter 70 gleiten kann.

Im oberen Bereich des Schachtes 30 befindet sich eine schwenkbare Schleusenklappe 84, die ein versehentliches Durchfallen des Brennelementskelettes 36 verhindert.

Die Betätigung der schwenkbaren Klappen 80, 82 und 84 und die Zustellung der Schere erfolgt mit Druckluft. Als Hydraulikflüssigkeit für die unter Wasser befindlichen Hydraulikantriebe für die Pressvorrichtung 40 und die Scherschneidvorrichtung 50 wird Deionat verwendet. Außerhalb des Beckenwassers, beispielsweise auf dem Beckenflur angeordnete Medienwandler sorgen dafür, dass mit Hydrauliköl betriebene Hydraulikaggregate zum Versorgen der Hydraulikantriebe eingesetzt werden können.

Die erfindungsgemäße Vorrichtung ist anhand eines besonders kompakten und platzsparenden Ausführungsbeispiels veranschaulicht. Grundsätzlich ist es auch möglich, dass Pressvorrichtung 40 und Scherschneidvorrichtung 50 nebeneinander über einem gemeinsamen Schacht oder über voneinander räumlich getrennte Schächte angeordnet sind.

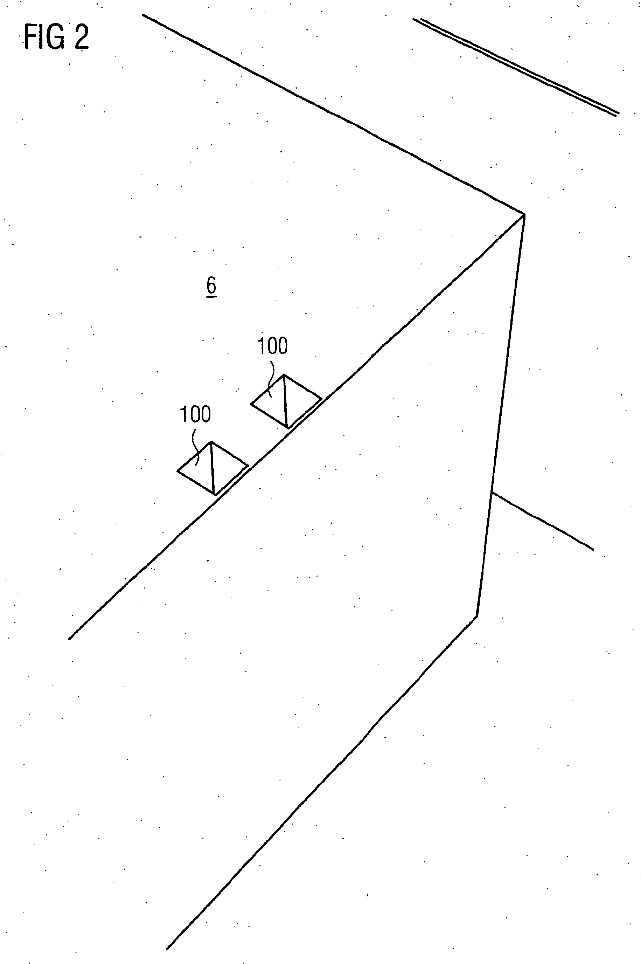

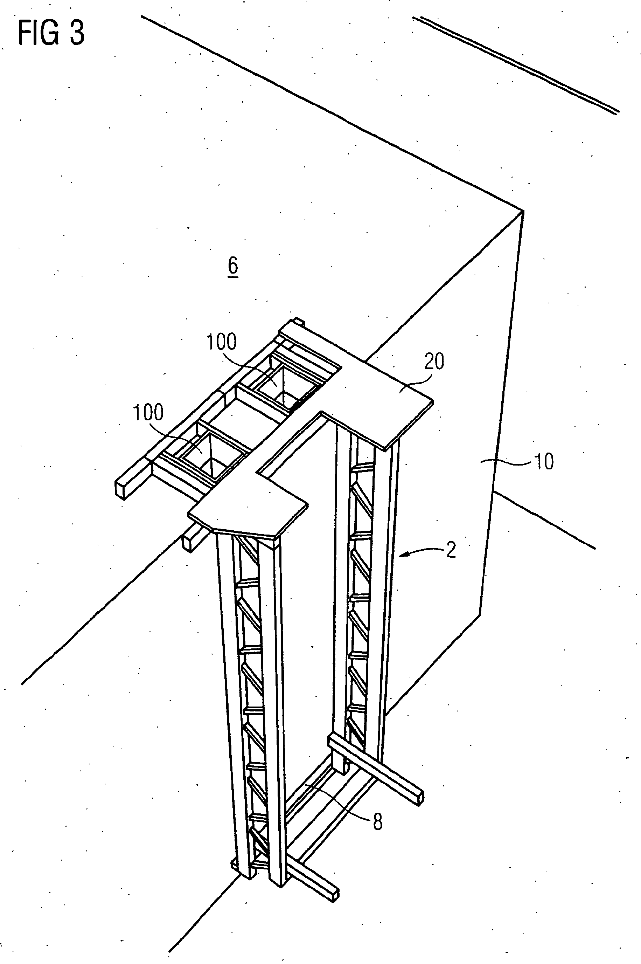

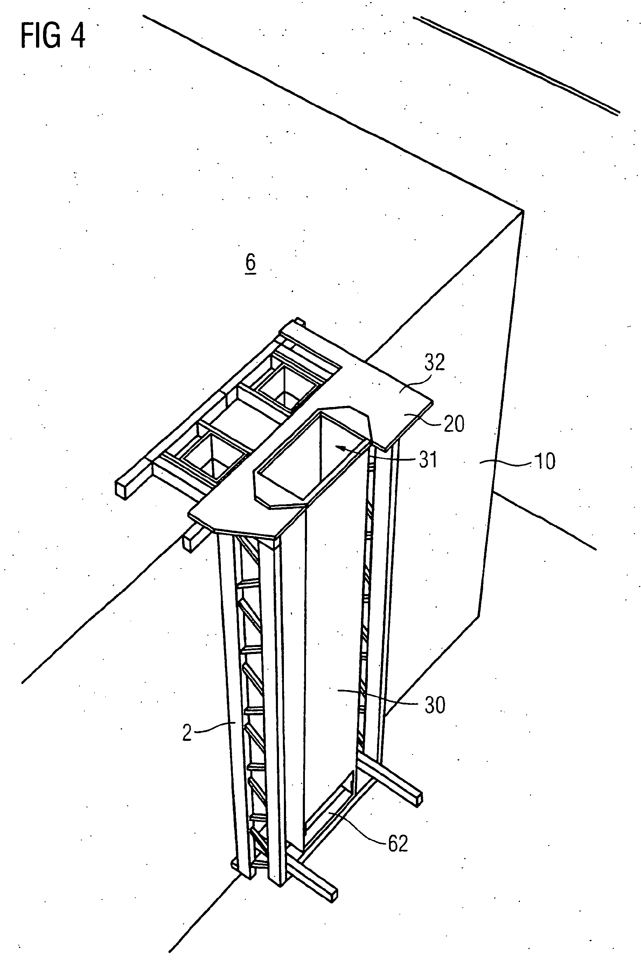

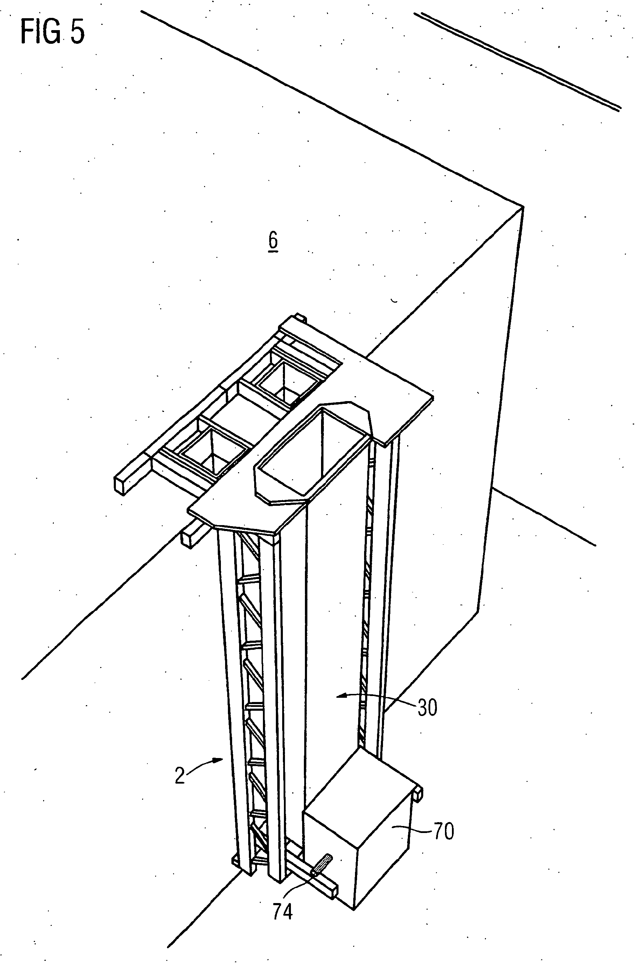

Anhand der Figuren 2 bis 10 wird der Montageablauf der in Fig. 1a,b dargestellten Vorrichtung schematisch veranschaulicht. Figur 2 zeigt schematisch die Außenkontur eines in einem mit Beckenwasser gefüllten Lagerbecken befindlichen Brennelementlagergestells 6. Am Rand des Brennelementlagergestells 6 befinden sich zur Vorbereitung der Montage der Vorrichtung zwei leere Brennelementpositionen 100. In diese Brennelementpositionen 100 wird nun gem. Fig. 3 das Gestell 2 eingehängt. In dieser Figur ist auch zu erkennen, dass das Gestell 2 frei im Lagerbecken hängt und sich lediglich an der Außenwand 10 des Brennelementlagergestelles 6 mit dem leistenförmigen Stützelement 8 abstützt. Im oberen Bereich des Gestells 2 ist die Lastverteilerplatte 20 angeordnet, in oder auf die gemäß Fig. 4 der Schacht 30 mit seiner am oberen Rand befindlichen Flanschplatte 32 aufgesetzt wird. In dieser Fig. 4 ist auch die untere Auslassöffnung 62 des Schachtes 30 zu erkennen. Schematisch veranschaulichte seitliche Führungen dienen zur Aufnahme und Führung des Auffangbehälters 70, der zugleich zum Transport des Schnittgutes in ein Zwischenlager dient. In der Darstellung gemäß Fig. 5 ist der Auffangbehälter 70 entlang der Führungskulisse 72 mit Hilfe seiner in dieser geführten Führungsbolzen 74 in seine Endposition gebracht und verschließt die Auslassöffnung 62 dicht.

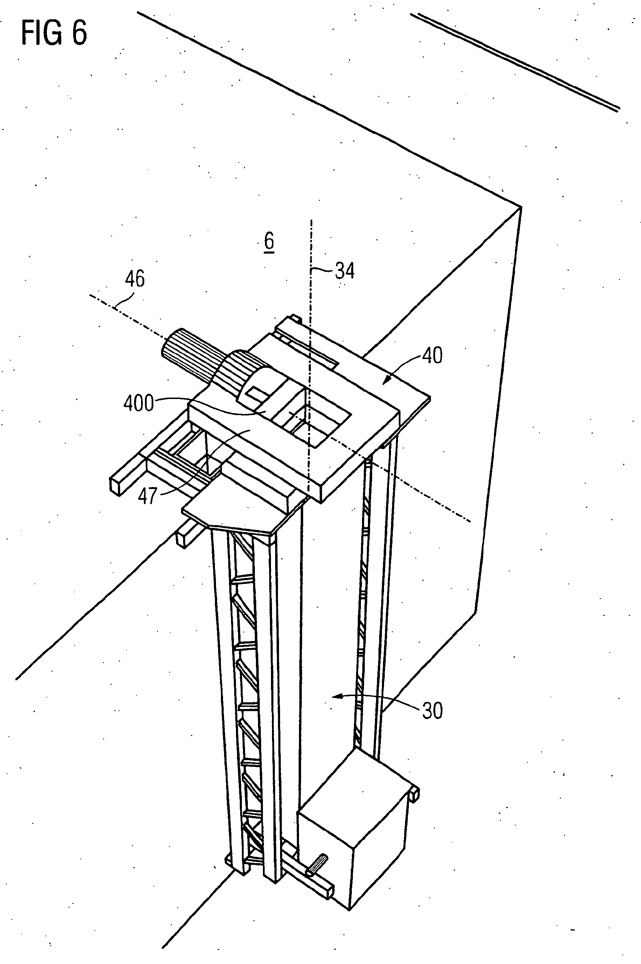

Auf die Lastverteilerplatte 20 wird gemäß Fig. 6 in einem nächsten Schritt die Pressvorrichtung 40 aufgesetzt. In der Figur ist ein senkrecht zur Längsachse des Schachtes 30 in dem geschlossenen Rahmen 47 entlang der Pressachse 46 axial verschiebbarer Pressstempel 400 zu erkennen.

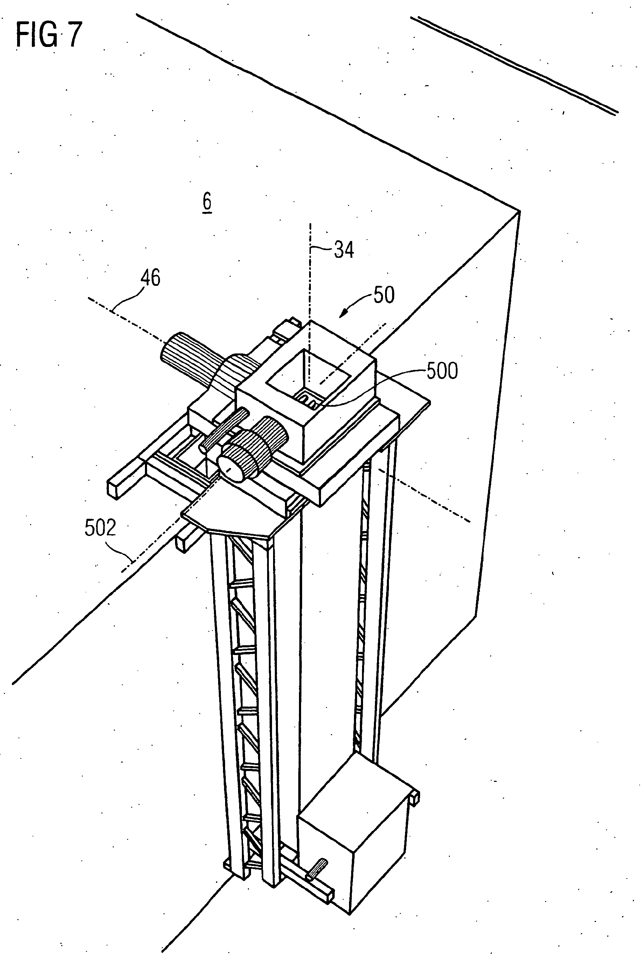

Auf die Pressvorrichtung 40 wird anschließend gemäß Fig. 7 die Scherschneidvorrichtung 50 aufgesetzt. In dieser Figur ist ebenfalls eine im geschlossenen Rahmen 53 angeordnete Schere 500 zu erkennen, die senkrecht zur Längsachse 34 und senkrecht zur Pressachse 46 entlang einer Zustellachse 502 verschieblich gelagert ist.

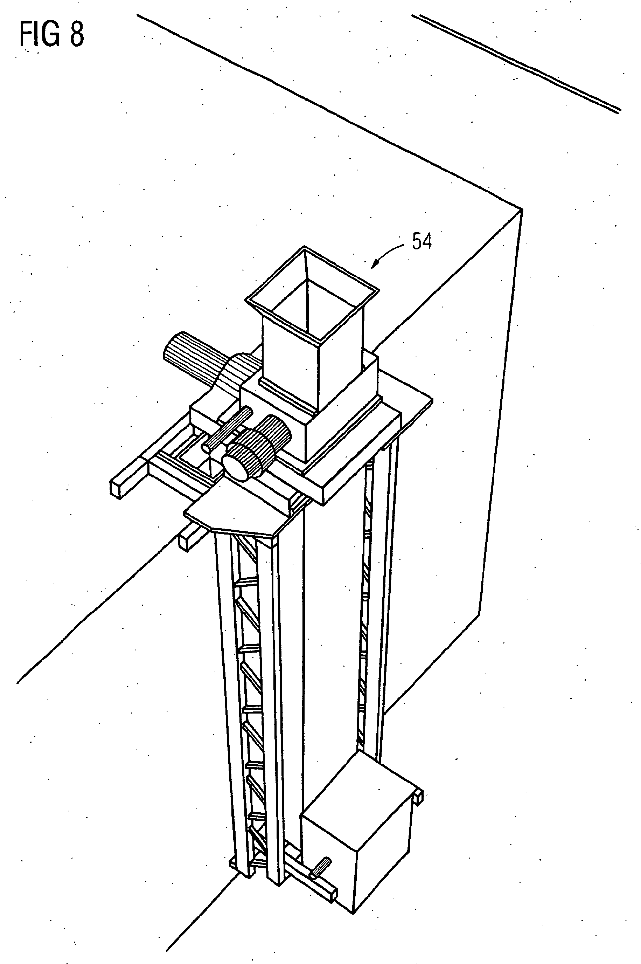

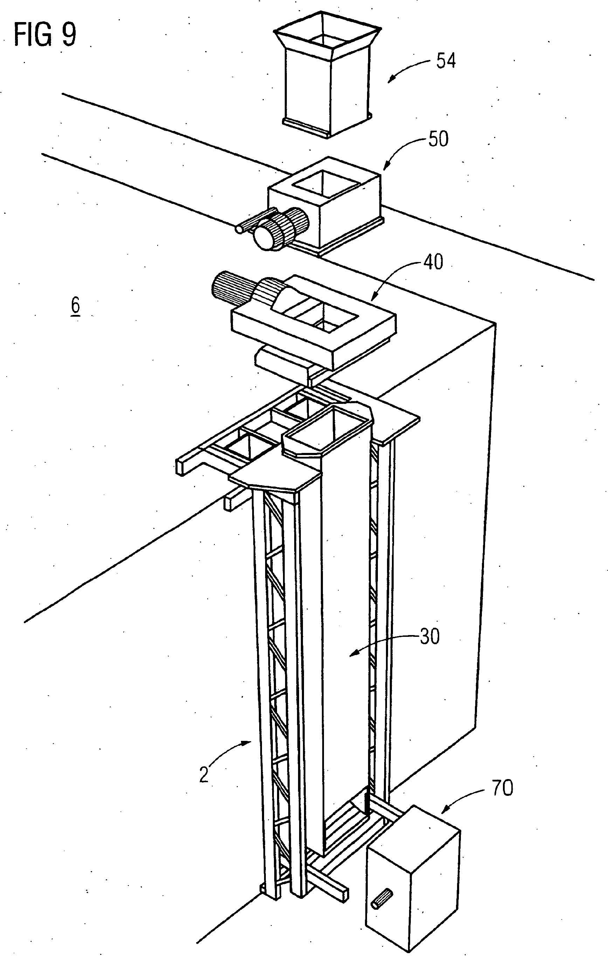

Auf die Scherschneidvorrichtung 50 wird nun gemäß Fig. 8 der Einführtrichter 54 aufgesetzt. Die Reihenfolge des Aufbaus ist nochmals anhand Fig. 9 näher veranschaulicht.

Grundsätzlich kann die Anordnung der Scherschneidvorrichtung 50 und der Pressvorrichtung 40 auch vertauscht werden.

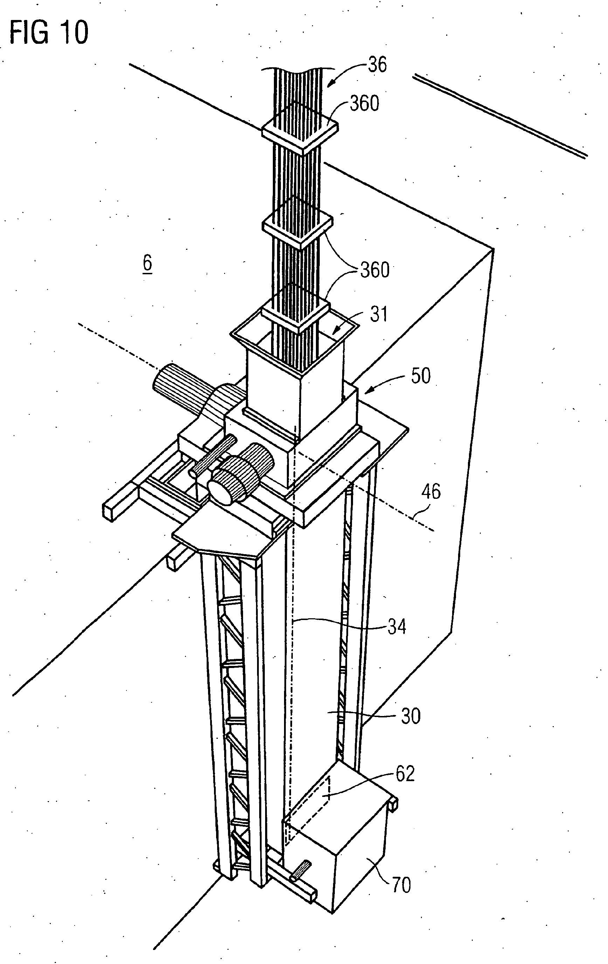

In Fig. 10 wird nun das Brennelementskelett 36 in die Vorrichtung eingeführt, bis der unterste der Abstandhalter 360 im Wirkbereich des Pressstempels angeordnet ist. In einem ersten Schritt wird nun der unterste Abstandhalter mit einer vorgegebenen Presskraft komprimiert. Anschließend wird das Brennelementskelett 36 nach unten verfahren bis der nächste Abstandhalter 360 im Wirkbereich des Pressstempels angeordnet ist. Auf diese Weise erfolgt ein sukzessives Komprimieren des Brennelementskelettes 36 mit einer ersten Presskraft F₁. Dieser Vorgang wird nun in der umgekehrten Reihenfolge mit einer zweiten höheren Presskraft F₂ wiederholt, mit der das Brennelementskelett 36 ebenfalls jeweils in Höhe der Abstandhalter 360 auf seine Endabmessungen komprimiert wird.

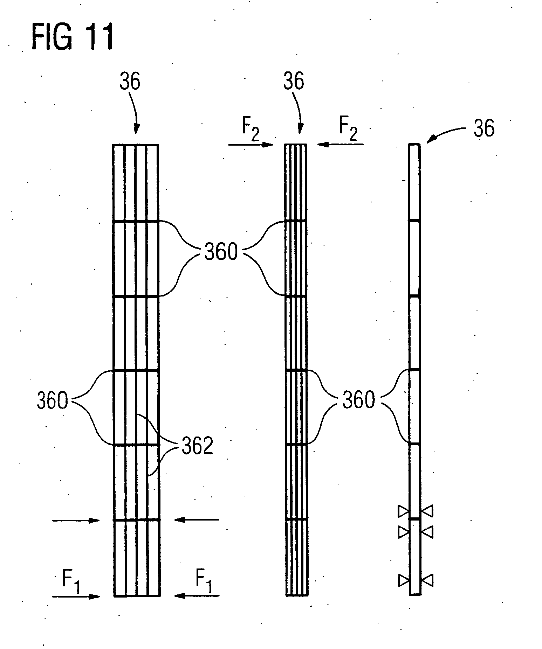

Dies ist in Fig. 11 grob schematisch veranschaulicht. Durch das Pressen mit der Presskraft F₁ wird der Abstandhalter 360 und damit in diesem Bereich das Brennelement 36 mit seinen Stützrohren 362 durch deren bei der Kompression des Abstandhalters stattfindende seitliche Umlagerung zunächst auf 30% bis 60%, vorzugsweise etwa 50% seines ursprünglichen Volumens komprimiert. Nach erfolgter sukzessiver erster Kompression erfolgt eine sukzessive zweite Kompression mit einer Presskraft F₂ die größer ist als die Presskraft F₁, so dass das Gesamtvolumen nunmehr auf 20% des ursprünglichen Volumens verringert ist. Durch eine solche zweistufige Kompression wird verhindert, dass die Stützrohre 362 beim durch das Pressen erfolgenden seitlichen Umlagern vom Abstandhalter 360 getrennt werden. Alternativ hierzu können auch zunächst eine Gruppe benachbarter Abstandhalter 360, beispielsweise die unteren vier Abstandhalter in zwei Schritten komplett komprimiert werden, bevor mit der zweistufigen Kompression der oberen Abstandhalter begonnen wird.

In darauffolgenden Schritten erfolgt nun an schematisch durch Dreiecksymbole veranschaulichten Positionen oberhalb und unterhalb der Abstandhalter 360 ein sukzessives Abschneiden der im Brennelementskelett 36 befindlichen Stützrohre 362, bei denen es sich um Instrumentierungsrohre, Steuerstabführungsrohre, Wasserrohre oder lediglich zur Stabilisierung dienende Strukturrohre handeln kann. In einem ersten Schritt werden die Stützrohre 362 knapp oberhalb des untersten Abstandhalters 360 abgeschnitten. Dann wird das Brennelementskelett 36 nach unten verfahren und es werden die Stützrohre 362 unterhalb und oberhalb des nächsten Abstandhalters 360 abgeschnitten. Beim obersten Abstandhalter 360 werden die Stützrohre 362 unterhalb dieses Abstandhalters 360 abgeschnitten.

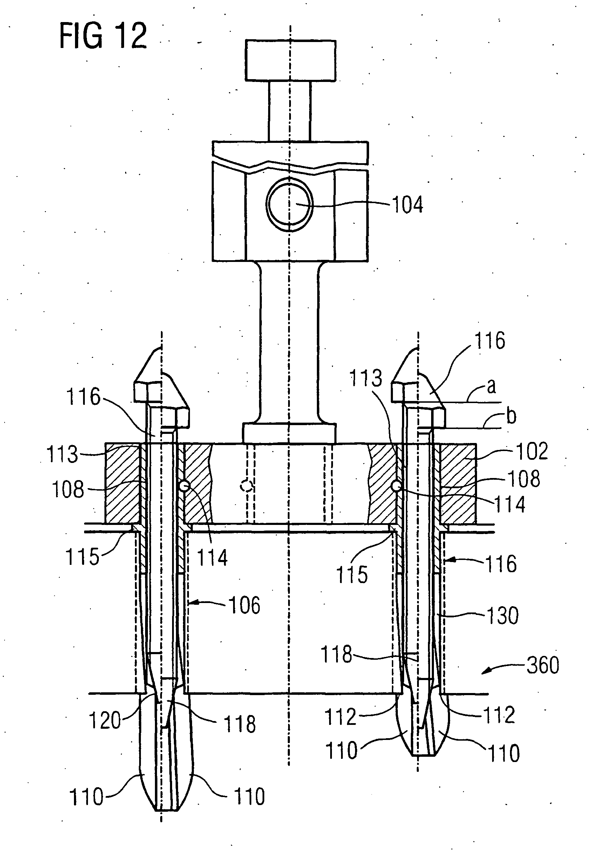

Gemäß Fig. 12 umfasst ein Halteelement zum Manövrieren des Brennelementskelettes eine Stützplatte 102, die an einem Kupplungsteil 104 zum Ankuppeln an eine Transportvorrichtung befestigt ist. Das Kupplungsteil 104 ist an die jeweils zum Einsatz vorgesehene Transportvorrichtung angepasst. In die Stützplatte 102 sind zwei hohle Ankerteile 106 eingesetzt, die auf der dem Kupplungsteil 104 gegenüberliegenden Seite der Stützplatte 2 vorstehen. Das Ankerteil 106 besteht aus einem hülsenförmigen Abschnitt 108 und sich daran anschließenden vier Federschenkeln 110, die in der Nähe ihres freien Endes mit einer außenliegenden Schulter 112 versehen sind. An ihrem freien Ende weisen die Federschenkel 110 hierzu eine Wandverstärkung auf.

Mit seinem hülsenförmigen Abschnitt 108 ist das Ankerteil 106 in eine Durchgangsbohrung 113 der Stützplatte 102 eingesetzt und dort mechanisch durch Stifte 114 gegen Herausfallen gesichert. Ein umlaufender Ringflansch 115 dient als Anschlag beim Einsetzen des Ankerteils 106 in die Stützplatte 102.

Der hülsenförmige Abschnitt 108 ist an ihrem Innenumfang mit einem Innengewinde versehen, in das ausgehend von der dem Kupplungsteil 104 zugewandten Teil der Stützplatte 102 ein Schraubbolzen 116 eingeschraubt ist. Der Schraubbolzen 116 weist an seinem freien Ende eine durch eine konusförmige Spitze 118 gebildete Gleitschräge auf, die beim Einschrauben in das Ankerteil 106 mit einer innenliegenden Kante 120 der Federschenkel 110 in Wirkverbindung gebracht wird. Bei weiterem Einschrauben des Schraubbolzens 116 gleitet die Kante 120 entlang der durch die konusförmige Spitze 118 gebildeten Schräge und wird nach außen gedrückt.

In der Figur sind für jedes der Ankerteile 106 zwei Positionen a und b eingezeichnet. Mit der Position a ist die Ausgangsposition dargestellt, die sich ergibt, wenn der Schraubbolzen 16 die Kante 120 berührt. Weiteres Einschrauben führt dann zu einem seitlichen Ausstellen der Federschenkel 110, wie dies durch die Position b veranschaulicht ist.

Die Außenabmessungen der Federschenkel 110 im Bereich zwischen Freiende und Schulter 112 sind so bemessen, dass bereits beim Einführen des Ankerteils in eine Zelle 130 des obersten Abstandhalters 360 des Brennelementskelettes die Federschenkel 110 radial nach innen gedrückt werden. Sobald die Schulter 112 der Federschenkel 110 die Unterkante des Abstandhalters erreicht, schnappen die Federschenkel 110 radial nach außen und hintergreifen jeweils ein Stegblech des Abstandhalters 360, so dass bereits ohne weitere Maßnahme eine Verankerung vorliegt. Der Abstand zwischen Schulter 112 und Ringflansch 115 des hülsenförmigen Abschnittes ist dabei so bemessen, dass Schulter 112 und Ringflansch 115 weitgehend spielfrei an der Unterkante bzw. der Oberkante des Abstandhalters 360 anliegen.

In der Figur ist außerdem zu erkennen, dass eines der Ankerteile 106 länger ist als das andere. Dadurch wird das Einführen zweier oder mehrerer Ankerteile 106 in eine entsprechende Anzahl von Zellen 130 des Abstandhalters 360 erleichtert, so dass zunächst nur das längere Ankerteil 6 in eine der Zellen eingeführt werden muss und anschließend lediglich durch eine einzige Schwenkbewegung die andere Zelle angesteuert werden muss.

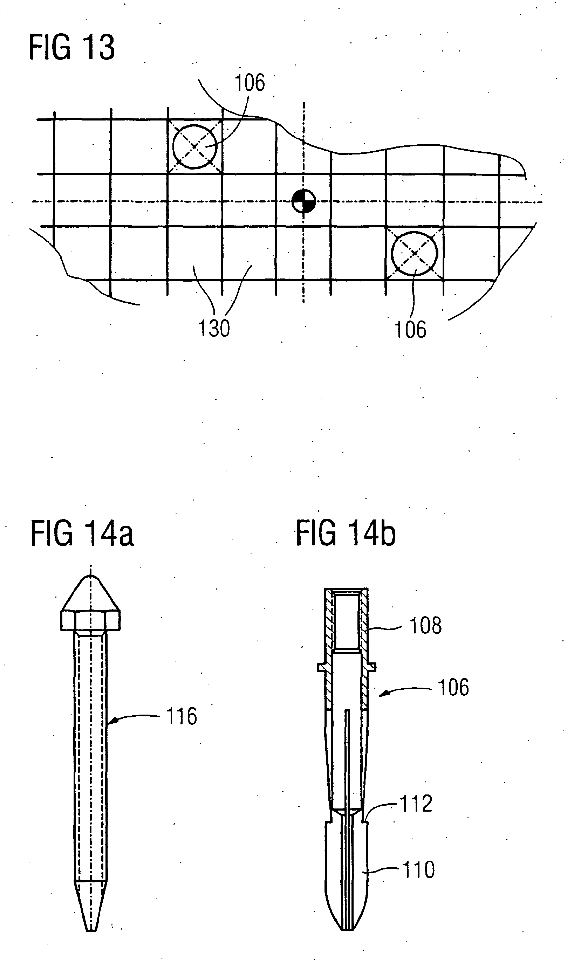

In Fig. 13 ist veranschaulicht, in welche Zelle 130 des oberen Abstandhalters 360 die Ankerteile 106 eingeführt werden.

Die Gestaltung des Ankerteils 106 sowie des Schraubbolzens 116 ist in Fig. 14a und b deutlicher zu erkennen. Bei dem Ankerteil 106 handelt es sich um ein einstückiges hülsenförmiges Drehteil aus dem die Federschenkel 110 durch Einbringen von Längsschlitzen herausgebildet sind.

## Patentansprüche

1. Vorrichtung zum Konditionieren eines Brennelementskelettes (36) eines Kernreaktors unter Wasser, mit:
a) wenigstens einem mit seiner Längsachse (34) vertikal ausgerichteten und oben mit einer Einlassöffnung (31) versehenen Schacht (30), in den das Brennelementskelett (36) auf zumindest nahezu seiner gesamten Länge einfahrbar ist,
b) einer oberhalb der Einlassöffnung (31) dieses Schachtes (30) oder oberhalb der Einlassöffnung eines weiteren Schachtes angeordneten, in einer quer zur Längsachse (34) dieses Schachtes (30) zustellbaren und in einer im wesentlichen quer zur Längsachse (34) dieses Schachtes (30) orientierten schneidebene wirkenden Scherschneidvorrichtung (50),
**gekennzeichnet durch**
c) einer oberhalb der Einlassöffnung (31) angeordneten, in einer quer zur Längsachse (34) orientierten Pressachse (46) wirkenden Pressvorrichtung (40),
d) einem an einer im unteren Bereich dieses Schachtes (30) befindlichen Auslassöffnung (62) des Schachtes positionierbaren und von dieser entnehmbaren Auffangbehälter (70).

2. Vorrichtung nach Anspruch 1, bei der Pressvorrichtung (40) und Scherschneidvorrichtung (50) übereinander angeordnet sind.

3. Vorrichtung nach Anspruch 1 oder 2, mit einem oberhalb der Scherschneid- und der Pressvorrichtung (50, 40) angeordneten Einführtrichter (54).

4. Vorrichtung nach einem der vorhergehenden Ansprüche, mit einem Gestell (2) zum Lagern des Schachtes (30), das sich in einem unteren Wandbereich des Brennelementlagergestells (6) abstützend am Rand eines Brennelementlagergestells (6) in zumindest eine leere Brennelementposition (100) einhängbar ist.

5. Vorrichtung nach einem der vorhergehenden Ansprüche, bei der Schacht (30), Scherschneidvorrichtung (50), Pressvorrichtung (40) und der gegebenenfalls vorhandene Einführtrichter (54) sowie das gegebenenfalls vorhandene Gestell (2) jeweils selbständige, zusammensetzbare und voneinander trennbare Baueinheiten bilden.

6. Vorrichtung nach einem der vorhergehenden Ansprüche, bei der die Auslassöffnung (62) in einer Seitenwand des Schachtes (30) angeordnet ist.

7. Vorrichtung nach Anspruch 6, mit einer im Schacht (30) schwenkbar angeordneten gekrümmten Auslassklappe (80) zum Führen des Schnittgutes (64) zur Auslassöffnung (62).

8. Vorrichtung nach Anspruch 6 oder 7, bei der die Auslassöffnung (62) mit einem nach oben schwenkbaren Deckel (60) versehen ist, der zugleich zum Verschließen des oben offenen Auffangbehälters (70) dient, wenn dieser in Arbeitsposition an die Auslassöffnung (62) angekoppelt ist.

9. Vorrichtung nach einem der Ansprüche 6 bis 8 jeweils in Verbindung mit Anspruch 4, bei der am Gestell (2) zu beiden Seiten des Schachtes (30) eine schräg zur Längsachse (34) verlaufende Führungskulisse (72) angeordnet ist, in die seitlich am Auffangbehälter (70) angeordnete Führungsbolzen (74) einführbar sind.

10. Vorrichtung nach einem der vorhergehenden Ansprüche, bei der die Schere (500) der Scherschneidvorrichtung (50) begrenzt beweglich in einem Kugelgelenk (51) gelagert ist.

11. Vorrichtung nach einem der vorhergehenden Ansprüche, bei der die Scherschneid- und die Pressvorrichtung (50, 40) hydraulisch angetrieben sind.

12. Vorrichtung nach Anspruch 11, bei der als Hydraulikfluid Wasser vorgesehen ist.

13. Vorrichtung nach Anspruch 12, bei der zur Scherschneid- und zur Pressvorrichtung (50, 40) Hydraulikleitungen vorgesehen sind, in die jeweils ein außerhalb des Wassers positionierbarer Medienwandler eingebaut ist.

14. Verfahren zum Konditionieren eines Abstandhalter (360) und Stützrohre (362) enthaltenden Brennelementskelettes (36) mit einer Vorrichtung nach einem der Ansprüche 1 bis 13, umfassend folgende Schritte:
a) Einführen des Brennelementskelettes (36) in die Pressvorrichtung (40) bis zu einer Tiefe, in der sich ein Abstandhalter (360) im Wirkbereich eines Pressstempels (400) der Pressvorrichtung (40) befindet,
b) Pressen des Abstandhalters (360) und der darin befindlichen Stützrohre (362) mit einer ersten Presskraft (F₁),
c) aufeinanderfolgendes Positionieren und Durchführen des Pressvorganges mit der ersten Presskraft (F₁) für jeden Abstandhalter (360),
d) Wiederholen des Pressvorganges für jeden Abstandhalter (360) mit einer zweiten, höheren Presskraft (F₂),
e) anschließendes Positionieren des verpressten Brennelementskelettes (36) im Arbeitsbereich der Scherschneidvorrichtung (50) in einer oberen Ausgangsposition und Abschneiden der Stützrohre (362) mit der Scherschneidvorrichtung (50),
f) stufenweises Verfahren des Brennelementskelettes (36) nach unten und sukzessives Abschneiden der Stützrohre (362) oberhalb und/oder unterhalb eines jeden Abstandhalters (360).

15. Verfahren nach Anspruch 14, bei dem das verpresste Brennelementskelett (36) in eine Ausgangsposition gebracht wird, in der sich die Scherschneidvorrichtung (50) in Wirkposition oberhalb des untersten Abstandhalters (360) befindet, und bei dem die Stützrohre (362) oberhalb dieses Abstandhalters (360) abgeschnitten werden.

16. Verfahren nach Anspruch 15, bei dem die Stützrohre (362) unterhalb und oberhalb der unterhalb des obersten Abstandhalters (360) befindlichen Abstandhalter (360) abgeschnitten werden.

17. Verfahren nach einem der Ansprüche 14 bis 16, bei dem zum Anheben und Absenken des Brennelementskelettes (36) auf den obersten Abstandhalter (362) ein an eine Greif- und Transportvorrichtung angekoppeltes Halteelement aufgesetzt wird, das eine auf dem Abstandhalter (360) aufliegende Stützplatte (102) und zumindest ein Ankerteil (106) umfasst, das in eine Zelle (130) des Abstandhalters (360) eingeführt wird, und zumindest zwei gegenüberliegende Stegwände dieser Zelle (130) hintergreift.

## Claims

1. Apparatus for the conditioning of a burner element skeleton (36) of a nuclear reactor under water, with:
a) at least one shaft (30), with its longitudinal axis (34) aligned vertically and provided at the top with an inlet aperture (31), into which the burner element skeleton (36) can be introduced to at least close to its entire length,
b) a shear cutting device (50) arranged above the inlet aperture (31) of this shaft (30) or above the inlet aperture of a further shaft, working in a cutting plane adjustable transverse to the longitudinal axis (34) of this shaft (30) and in a cutting plane oriented essentially transverse to the longitudinal axis (34) of this shaft (30), **characterised by**
c) a pressing device (40) arranged above the inlet aperture (31), working in a press axis (46) oriented transverse to the longitudinal axis (34),
d) a catchment container (70) which can be positioned at and can be removed from an outlet aperture (62) located in the lower area of this shaft (30).

2. Apparatus according to Claim 1, in which the pressing device (40) and the shear cutting device (50) are arranged above one another.

3. Apparatus according to Claim 1 or 2, with an infeed hopper (54) arranged above the shear cutting device and the pressing device (50, 40).

4. Apparatus according to any one of the preceding claims, with a frame (2) for mounting the shaft (30), which can be suspended in a lower wall area of the burner element mounting frame (6), supported at the edge of a burner element mounting frame (6) in at least one empty burner element position (100).

5. Apparatus according to any one of the preceding claims, in which the shaft (30), the shear cutting device (50), the pressing device (40) and the infeed hopper (54) if present, as well as the frame (2), if present, in each case form independent construction units which can be assembled together and separated from one another.

6. Apparatus according to any one of the preceding claims, in which the outlet aperture (62) is arranged in a side wall of the shaft (30).

7. Apparatus according to Claim 6, with a cambered outlet flap (80) arranged so as to be able to pivot in the shaft (30) in order to conduct the cut material (64) to the outlet aperture (62).

8. Apparatus according to Claim 6 or 7, in which the outlet aperture (62) is provided with a cover (60) which can be pivoted upwards, which serves at the same time to close off the catchment container (70) open at the top, when this is coupled to the outlet aperture (62) in the operating position.

9. Apparatus according to any one of Claims 6 to 8, in each case in conjunction with Claim 4, in which a guide link (72) is arranged on the frame (2) on both sides of the shaft (30) running obliquely to the longitudinal axis (34), into which guide bolts (74), arranged laterally at the catchment container (70), can be introduced.

10. Apparatus according to any one of the preceding claims, in which the shears (500) of the shear cutting device (50) are mounted in a ball joint (51) such as to have limited movement.

11. Apparatus according to any one of the preceding claims, in which the shear cutting device and the pressing device (50, 40) are hydraulically driven.

12. Apparatus according to Claim 11, in which water is provided as a hydraulic fluid.

13. Apparatus according to Claim 12, in which hydraulic lines are provided to the shear cutting device and the pressing device (50, 40), into which in each case a media converter is incorporated, able to be positioned outside the water.

14. Method for conditioning a distance interval spacer element (360) and a burner element skeleton (36) containing support tubes (362) with apparatus according to any one of Claims 1 to 13, comprising the following steps:
a) introduction of the burner element skeleton (36) into the pressing device (40) as far as a depth at which a distance interval spacer element (360) is located in the operational range of a pressing ram (400) of the pressing device (40),
b) pressing of the distance interval spacer element (360) and the support tubes (362) located in it with a first pressing force (F₁),
c) sequential positioning and carrying out of the pressing procedure with the first pressing force (F₁) for each distance interval spacer element (360),
d) repetition of the pressing procedure for each distance interval spacer element (360) with a second higher pressing force (F₂) ,
e) subsequent positioning of the pressed burner element skeleton (36) in the operating range of the shear cutting device (50) in an upper starting position and cutting off of the support tubes (362) with the shear cutting device (50),
f) step-by-step movement of the burner element skeleton (36) downwards and successive cutting off of the support tubes (362) above and/or below each distance interval spacer element (360).

15. Method according to Claim 14, in which the pressed burner element skeleton (36) is brought into an initial position in which the shear cutting device (50) is arranged in the working position above the lowest distance interval spacer element (360), and in which the support tubes (362) are cut off above this distance interval spacer element (360).

16. Method according to Claim 15, in which the support tubes (362) are cut off below and above the distance interval spacer elements (360) located beneath the uppermost distance interval spacer element (360).

17. Method according to any one of Claims 14 to 16, in which, in order to raise and lower the burner element skeleton (36), a retaining element coupled to a gripper and transport device is placed onto the uppermost distance interval spacer element (362), which comprises a support plate (102) lying on the distance interval spacer element (360) and at least one anchor part (106), which is introduced into a cell (130) of the distance interval spacer element (360) and engages behind at least two opposed web walls of this cell (130).

## Revendications

1. Dispositif de conditionnement d'une ossature (36) d'assemblage combustible d'un réacteur nucléaire sous l'eau comprenant :
a) au moins un puits (30) dont l'axe (34) longitudinal est vertical et qui est muni en haut d'une ouverture (31) d'introduction dans laquelle l'ossature (36) d'assemblage combustible peut être introduite sur au moins à peu près toute sa longueur,
b) un dispositif (50) de cisaillage disposé au-dessus de l'ouverture (31) d'admission de ce puits (30) ou au-dessus de l'ouverture d'admission d'un autre puits pouvant être avancé dans une direction perpendiculaire à l'axe (34) longitudinal de ce puits (30) et agissant dans un plan de coupe orienté sensiblement transversalement à l'axe (34) longitudinal de ce puits (30),
**caractérisé par**
c) un dispositif (40) de compression disposé au-dessus de l'ouverture (31) d'admission et agissant suivant un axe (46) de compression orienté transversalement à l'axe (34) longitudinal,
d) un récipient (70) de réception pouvant être mis en position sur une ouverture (62) de sortie du puits se trouvant dans la partie inférieure de ce puits (30) et pouvant en être retiré.

2. Dispositif suivant la revendication 1, dans lequel le dispositif (40) de compression et le dispositif (50) de cisaillage sont disposés l'un au-dessus de l'autre.

3. Dispositif suivant la revendication 1 ou 2, comprenant une trémie (54) d'introduction disposée au-dessus des dispositifs (50, 40) de cisaillage et de compression.

4. Dispositif suivant l'une des revendications précédentes, comprenant un bâti (2) de montage du puits (30) celui-ci, en s'appuyant dans une partie inférieure de paroi du bâti (6) de montage des assemblages combustibles, peut être suspendu au bord d'un râtelier (6) de montage d'assemblage combustible dans au moins une position (100) vide d'assemblage combustible.

5. Dispositif suivant l'une des revendications précédentes, dans lequel le puits (30), le dispositif (50) de cisaillage, le dispositif (40) de compression et la trémie (54) d'introduction éventuellement présente ainsi que le bâti (2) éventuellement présent forment respectivement des unités de construction autonomes pouvant être rassemblées et pouvant être séparées les unes des autres.

6. Dispositif suivant l'une des revendications précédentes, dans lequel l'ouverture (62) de sortie est disposée dans une paroi latérale du puits (30).

7. Dispositif suivant la revendication 6, comprenant un volet (80) de sortie courbé monté basculant dans le puits (30) pour guider du produit (64) coupé vers l'ouverture (62) de sortie.

8. Dispositif suivant la revendication 6 ou 7, dans lequel l'ouverture (62) de sortie est munie d'un couvercle (60) pouvant basculer vers le haut et servant en même temps à fermer le récipient (70) de réception ouvert vers le haut lorsque celui-ci est couplé en position de travail à l'ouverture (62) de sortie.

9. Dispositif suivant l'une des revendications 6 à 8, respectivement en liaison avec la revendication 4, dans lequel il est monté sur le bâti (2) des deux côtés du puits (30) une coulisse (72) de guidage qui s'étend de façon inclinée par rapport à l'axe (34) longitudinal et dans laquelle peuvent être introduits latéralement des axes (74) de guidage disposés sur le récipient (70) de réception.

10. Dispositif suivant l'une des revendications précédentes, dans lequel la cisaille (500) du dispositif (50) de cisaillement est montée mobile de manière limitée dans une articulation (51) à bille.

11. Dispositif suivant l'une des revendications précédentes, dans lequel les dispositifs (50, 40) de cisaillement et de compression sont à entraînement hydraulique.

12. Dispositif suivant la revendication 11, dans lequel il est prévu de l'eau comme fluide hydraulique.

13. Dispositif suivant la revendication 12, dans lequel il est prévu pour les dispositifs (50, 40) de cisaillement et de compression des conduits hydrauliques dans lesquels est monté respectivement un convertisseur de milieu pouvant être mis en position en dehors de l'eau.

14. Procédé de conditionnement d'une ossature (36) d'assemblage combustible contenant des entretoises (360) et des tubes (362) d'appui par un dispositif suivant l'une des revendications 1 à 13, comprenant des stades suivants :
a) on introduit l'ossature (36) d'assemblage combustible dans le dispositif (40) de compression jusqu'à une profondeur à laquelle une entretoise (360) se trouve dans le champ d'action d'un fouloir (400) du dispositif (40) de compression,
b) on comprime l'entretoise (360) et les tubes (362) d'appui qui s'y trouvent suivant une première force (F₁) de compression,
c) on met successivement en position et on effectue l'opération de compression suivant la première force (F1) de compression pour chaque entretoise (360),
d) on répète l'opération de compression pour chaque entretoise (360) avec une deuxième force (F₂) de compression plus grande,
e) on met ensuite en position l'ossature (36) d'assemblage combustible comprimé dans la zone de travail du dispositif (50) de cisaillage dans une position de départ supérieure et on coupe les tubes (362) d'appui par le dispositif (50) de cisaillage,
f) on déplace pas à pas l'ossature (36) d'assemblage combustible vers le bas et on découpe successivement les tubes (362) d'appui au-dessus et/ou en dessous de chaque entretoise (360).

15. Procédé suivant la revendication 14, dans lequel on met l'ossature (36) d'assemblage combustible comprimé dans une position de départ dans laquelle le dispositif (50) de cisaillage se trouve en position de travail au-dessus de l'entretoise (360) la plus basse et on coupe les tubes (362) d'appui au-dessus de cette entretoise (360).

16. Procédé suivant la revendication 15, dans lequel on coupe les tubes (362) d'appui en dessous et au-dessus de l'entretoise (360) se trouvant en dessous de l'entretoise (360) la plus haute.

17. Procédé suivant l'une des revendications 14 à 16, dans lequel pour soulever et abaisser l'ossature (36) d'assemblage combustible on met sur l'entretoise (362) la plus haute un élément de maintien couplé à un dispositif de préhension et de transport, élément de maintien qui comprend un plateau (102) d'appui s'appliquant à l'entretoise (360) et au moins une ancre (106) qui est introduite dans une maille (130) de l'entretoise (360) et qui s'accroche à au moins deux parois pleines opposées de cette maille (130).
